# EUROPEAN PATENT SPECIFICATION

(11) **EP 1 607 326 B1**
(45) Date of publication and mention of the grant of the patent: **13.08.2008**
(21) Application number: 05013006.1
(22) Date of filing: 16.06.2005
(51) Int. Cl.: B64C 13/16, B64C 27/00

(54) **System and method for reducing the loads acting on the fuselage structure in means of transport**
Vorrichtung und Verfahren zur Reduzierung der Lasten auf eine Rumpfstruktur von Transportmitteln
Dispositif et procédé pour réduire les charges sur un fuselage d'un moyen de transport

(30) Priority: 16.06.2004 DE 102004029196; 02.09.2004 US 606665 P
(43) Date of publication of application: 21.12.2005
(73) Proprietor: Airbus Deutschland GmbH, 21129 Hamburg (DE)
(72) Inventor: Enzinger, Michael, 21629 Neu-Wulmstorf (DE); Kordt, Michael, 22587 Hamburg (DE)
(74) Representative: Maiwald Patentanwalts GmbH

(56) References cited:
- EP-A- 0 293 018
- DE-A1- 19 925 982
- US-A- 5 667 166
- US-A- 2003 205 644

## Description

The invention relates to a system and to a method for reducing the loads acting on the fuselage structure in means of transport.

Fuselage structure loads and thus the structural design and structural weight and the comfort of large flexible aircraft as well as of aircraft with long front and back fuselage result from the aircraft's dynamic response to gusts and manoeuvres, and the forces resulting there from, respectively.

From the state of the art, aircraft mode and aircraft oscillation type suppression systems, respectively, are known for attenuating selected elastic fuselage bending oscillation types and fuselage bending modes caused by gusts. They are based on control systems using control-, guiding- and/or regulating surfaces, respectively. They serve merely for attenuating one or several selected fuselage bending modes caused by gusts. Furthermore, devices for wing load reduction are known from the state of the art.

EP 0 293 018 and US 2003/0205644 describe an aircraft modal suppression system. DE 199 25 982 describes a rotarywing aircraft which has an actively controllable interface between airframe and rear boom to suppress oscillation. US 5,667,166 describes an aircraft frequency adaptive modal suppression system.

It is an object of the invention to provide a system and a method which make it possible to reduce the loads acting on the fuselage structure of a means of transport.

This object may be solved by a means of transport with the features of claim 1 and by a method with the features of claim 9.

A significant reduction in the loads acting on the fuselage structure of a means of transport in a particular frequency interval may be possible in that an amplitude characteristics and/or a phase characteristics of structural loads acting on the fuselage can be modified so that a reduction in the load acting on a fuselage structure of a means of transport results. This may allow to meet strength specifications which might be impossible to be met without applying the method. Furthermore, increased comfort in means of transport can be achieved by a system according to an exemplary embodiment of the invention.

According to an exemplary embodiment of the invention, a significant reduction in the loads acting on the fuselage structure of a means of transport in a particular frequency interval may be possible in that an amplitude characteristics and/or a phase characteristics of structural loads acting on the fuselage can be modified so that a reduction in the load acting on a fuselage structure of a means of transport results, wherein at least one sensor element is positioned in an area where wings of said means of transport are attached to the fuselage structure. This may allow to meet strength specifications which would be impossible to be met without applying the method. Furthermore, increased comfort in means of transport can be achieved by a method according to an exemplary embodiment of the invention.

By means of the system according to an embodiment of the invention and/or the method according to an embodiment of the invention, dynamic fuselage structure design loads, accelerations and/or deformations (hereinafter abbreviated to "fuselage structure loads"), which are induced into the fuselage structure for example by gusts, turbulence or flight manoeuvres, may be reduced with the use of sensor elements for detecting the fuselage movements, at least one control unit for modification of the signals provided by the sensor elements, at least one actuator, an active material or a supporting active force or position set system.

In contrast to an embodiment of the invention, it is believed that known devices or methods do not serve for reducing fuselage structural loads (that is structural loads acting on the fuselage structure).

In order to reduce such fuselage structure loads according to an exemplary embodiment of the invention, it is necessary to simultaneously modify rigid body modes, for example the dutch roll mode and elastic fuselage modes or types of fuselage oscillation including externally enforced oscillation (hereinafter in brief referred to as " fuselage mode").

Furthermore, a simple attenuation of elastic fuselage modes represents only a very specific modification of the amplitude characteristics and phase characteristics of a mode. An efficient reduction in structural loads according to an exemplary embodiment of the invention therefore necessitates further-reaching modifications of the amplitude position and phase position of the fuselage structure loads.

Consequently, for reducing the loads acting on the fuselage structure according to an exemplary embodiment of the invention, it should not simply be modified the amplitude characteristics and phase characteristics in the region of the elastic modes and of the rigid body modes. Instead, it may be necessary according to an exemplary embodiment of the invention to also modify the frequency range between rigid body modes and elastic modes, and between adjacent elastic modes in such a way that the loads acting on the fuselage structure are reduced as far as possible. This means that an optimal reduction in the loads acting on the fuselage structure may require general modification of the frequency range of the rigid body modes and of the essential elastic modes of the fuselage. In many aircraft, this relevant frequency range may be between 0 and 10 Hz, in some cases in several frequency intervals between 0 and 100 Hz.

According to an exemplary embodiment of the invention, the loads acting on the fuselage structure may be reduced by means of actuators which act upon the control-, guiding- and/or regulating surfaces of the means of transport, in particular of an aircraft. The control-, guiding- and/or regulating surfaces are in particular ailerons and rudders if the system according to an embodiment of the invention or the method according to an embodiment of the invention is used in an aircraft. In an alternative embodiment, at least one actuator (for instance piezoelectric actuators) directly acts on the fuselage structure of the means of transport so as to reduce the loads acting on the fuselage structure. The term fuselage structure may include interior structures, for instance the floor and its lateral and vertical integration or simple interior cross beams. The term actuator includes particularly active controllable and modifiable materials which may be integrated directly in the structure and may include active force and position set systems which are simultaneously mounted in the structure also contributing or promoting the structure. A reduction in the loads acting on the fuselage structure is achieved by modifying the forces and movements impinging on the fuselage structure which are caused by the correspondingly controlled or regulated control-, guiding- (or guide-) and/or regulating surfaces, and/or the actuators acting directly on the fuselage structure, and/or the active materials, and/or the supporting active force and position set systems. The control-, guiding- and/or regulating surfaces influenced by the actuators, as well as any actuators, active materials and/or supporting active force and position set systems which act directly on the fuselage structure can be combined in any desired way both in relation to the way they interact between or among each other, and in relation to their number.

Controlling or regulating the actuators may take place depending on measuring signals acquired by means of sensor elements, which measuring signals after a conversion to a regulated quantity within a control unit may be modified by filter elements and the like to form a set value, wherein the set value modified in this way may be conveyed to the actuators via an amplification factor unit and as a result of this is fed back to the fuselage structure. The set signal/s present at the actuators may represent a regulated quantity. The actuators can act on the fuselage structure directly and/or indirectly via control-, guiding- and/or regulating surfaces so as to reduce the loads acting on the fuselage structure of the means of transport.

Control or regulation by the system according to an embodiment of the invention or the method according to an embodiment of the invention may be effective in parts of or in the entire frequency range of the rigid body modes and/or of the elastic modes of the fuselage structure; it may cover for example a frequency range of between 0 Hz and 10 Hz, or between 5 Hz and 50 Hz.

The term "rigid body mode" may particularly be denoted as "rigid body eigen form". The term "elastic mode" may particularly be denoted as "elastic eigen form".

As an addition or as an alternative to the control unit, a regulating unit may be employed according to an exemplary embodiment of the invention.

According to an exemplary embodiment of the invention, it may be advantageous that the loads acting on the fuselage structure may be reduced, which loads can for example be caused by gusts and/or flight manoeuvres, by a drastic modification of the movements in the fuselage structure and of the mechanical forces acting on said fuselage structure in a particular frequency interval.

The effectiveness of the system according to an embodiment of the invention and the number of the available design parameters (for example the sensor elements to be selected, the control-, guiding- and/or regulating surfaces to be determined, the actuators, the selection and the design of a suitable control unit) are varied so that the critical frequency range can be precisely determined according to the loads acting on the fuselage structure, which loads are to be reduced. According to an exemplary embodiment of the invention, this does not bring about any impairment in the aircraft design or in the integrity of said aircraft design.

According to an exemplary embodiment of the invention, a system and a method for fuselage structure design load, acceleration and/or deformation reduction in means of transport, particularly in aircraft, is provided, comprising at least one sensor element, at least one actuator, an active material integrated in the fuselage structure or a supporting active force and/or position set system, and at least one control unit.

According to an exemplary embodiment of the invention, a weight reduction and an improvement in comfort may be obtained.

An exemplary embodiment of the invention relates to a system for reducing the loads acting on the fuselage structure in means of transport, in particular in aircraft, comprising at least one sensor element, at least one actuator, an active material integrated in the fuselage structure or a supporting active force or position set system, and at least one control unit.

According to an exemplary embodiment the invention, the amplitude characteristic and/or a phase characteristic of fuselage structure design loads, accelerations and/or deformations are/is modifiable such that a reduction in the design load or acceleration acting on a fuselage structure of a means of transport occurs, as a result of which a significant reduction in weight or improvement in comfort of a means of transport is possible in a particular frequency interval.

Furthermore, the invention relates to a method for reducing the loads acting on the fuselage structure in means of transport, in particular in aircraft, comprising at least one sensor element, at least one actuator, an active material integrated in the fuselage structure or a supporting active force or position set system, and at least one control unit.

According to the method of the invention, an amplitude characteristic and/or phase characteristic of fuselage structure design loads, accelerations and deformations are/is modified such that a reduction in the design load or acceleration acting on a fuselage structure of a means of transport occurs, as a result of which a significant reduction in weight or improvement in comfort of a means of transport in a particular frequency range is possible.

Further exemplary embodiments of the invention are stated in further claims.

The following is shown in the drawing:
- **Fig. 1**: an exemplary representation of a system for reducing the loads acting on the fuselage structure of an aircraft in the case of lateral loads acting on the fuselage structure;
- **Fig. 2**: Transverse forces Q_{Y} in a fuselage structure of an aircraft with and without the use of the system in three different versions for reducing the loads acting on the fuselage structure;
- **Fig. 3**: Bending moment M_{X} in a fuselage structure of an aircraft with and without the use of the system for reducing the loads acting on the fuselage structure; and
- **Fig. 4**: Torsional moment M_{Z} in a fuselage structure of an aircraft with and without the use of the system for reducing the loads acting on the fuselage structure.

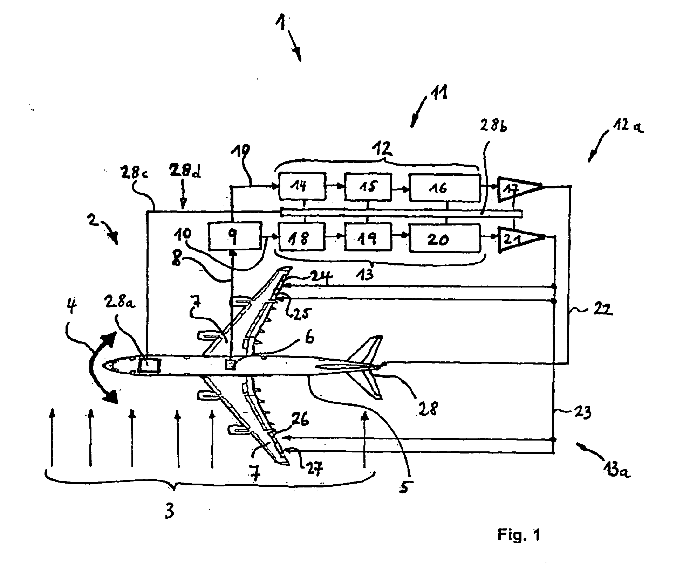

**Fig. 1** shows a schematic embodiment of the system 1 according to the invention, for reducing the load acting on the fuselage.

An aircraft 2 essentially encounters gusts 3 transversely to a longitudinal direction of the aircraft 2. This results in fuselage structure loads (indicated by a double arrow 4) acting on the fuselage structure 5 of the aircraft 2. The fuselage structure loads are thus essentially caused by the gusts 3. However, such fuselage structure loads can also be induced in the fuselage structure 5 by respective flight manoeuvres of the aircraft 2.

Fig. 1 predominantly illustrates the reduction in lateral fuselage structure loads by means of the system 1 according to the invention, which loads are caused in the fuselage structure 5 by gusts 3. Beyond this, the system 1 according to the invention is equally suited for reducing vertical fuselage structure loads (not shown) and/or for reducing flight-manoeuvre-induced fuselage structure loads (also not shown).

In the embodiment shown, a sensor element 6 is positioned in the area where the wings 7 are attached to the fuselage structure 5. Preferably, the sensor element 6 is positioned in a location where it can detect as well as possible the loads acting on the fuselage structure, either directly or at least by way of the movements or forces caused by said loads. It is particularly advantageous if the sensor element 6 is arranged in a region of the fuselage structure 5 in which the highest loads acting on the fuselage structure occur.

The sensor element 6 can for example be a strain gauge or extensometer, an optical sensor, a Bragg sensor, a piezoelectric sensor, an acceleration sensor, a speed sensor or the like. Furthermore, the use of several sensor elements 6 using identical and/or different technologies in various locations of the fuselage structure 5 of the aircraft 2 is possible.

A measuring signal 8 supplied by the sensor element 6 is first conveyed to a signal processing unit 9, which can for example comprise an anti-aliasing filter, a signal amplifier for changing the amplitude, etc. The sensor element 6 converts any movement in the fuselage structure 5 and/or converts the forces acting on the fuselage structure 5 into the measuring signal 8 which thus contains all essential information about the loads acting on the fuselage structure.

From the signal processing unit 9, the measuring signal 8 reaches the control unit 11 as a control variable 10. At the control unit 11, a corresponding modification takes place by way of filter means and the like for reducing the loads acting on the fuselage structure. For this purpose, in the embodiment shown in Fig. 1, the control unit 10 comprises two regulating lines 12, 13, arranged in parallel. The regulating line 12 comprises a low-pass filter 14, a high-pass filter 15, a phase correction unit 16 as well as an amplification factor unit 17 connected in series. Correspondingly, the regulating line 13 comprises a low-pass filter 18, a high-pass filter 19, a phase correction unit 20 as well as an amplification factor unit 21 connected in series.

The low-pass filters 14, 18 are used to remove higher-frequency components from the control variable 10. The low-pass filters thus let those signals pass whose frequencies correspond to the frequencies of at least one rigid body eigen value and/or of an elastic eigen value. Correspondingly, the high-pass filters 15, 19 are used to remove low-frequency components from the control variable 10. The amplification factor units 17, 21 are used to amplify and to form two set values 22, 23 which by way of actuators (not shown in detail in Fig. 1) act upon the ailerons 24, 25, 26, 27 as well as on the rudder 28 of the aircraft 2. By means of the phase correction units 16, 20, a phase correction of the control variable 10 becomes possible, i.e. a time shift becomes possible in the control variable 10 to compensate further system-imminent delays.

In an alternative embodiment (not shown in Fig. 1) of the system according to the invention it is possible that, additionally or exclusively, actuators are provided which act directly on the fuselage structure 5 of the aircraft 2. These actuators can be piezoelectric actuators, active materials integrated in the fuselage structure, or supporting active force and position set systems, for example they can be hydraulic cylinders whose bearings and piston rods are friction-locked to the fuselage structure.

The control unit 11 comprises an amplification factor "a" which is used for setting the amplitude of the loads acting on the fuselage structure or of the control variable 10, which represents said loads acting on the fuselage structure. Setting the amplification factor "a" can for example take place in the signal processing unit 9 by means of the signal amplifier (not shown in detail) or by means of some other functional unit.

The low-pass filters 14, 18 are parameterised low-pass filters of the first order with f_{low-pass}(s)=1/(s+b) or a higher-order low-pass filter. In this arrangement, the cut-off frequency up to which the low-pass filter allows signals to pass is determined by the parameter "b". The high-pass filters 15, 19 as well as the phase correction units 16, 20 are not obligatory for proper functioning of the device according to the invention, however, they can further enhance its effectiveness.

The control unit 11 thus acts evenly in the frequency range from 0 Hz to the cut-off frequency determined by the parameter "b". Normally - due to set rate limitations of the actuators, of the ailerons and the rudder 24, 25, 26, 27, 28, as well as due to system-imminent delays - the technically relevant frequency range is approximately 0 Hz to 10 Hz. By selecting the parameter "b", the frequency range of the loads acting on the fuselage structure, which frequency range is to be modified, is determined, whereas the parameter "a" only modifies the amplitude characteristics.

The control unit 11 can thus also be integrated into known flight-mechanics regulators or controllers if the flight-mechanics controller also has a low-pass, and if identical sensor elements 6 are used for the flight-mechanics regulator and for the system for reducing the loads acting on the fuselage structure. In this case the cut-off frequency of a low-pass contained in the flight-mechanics regulator would have to be selected so as to be the same as the cut-off frequency of the low-pass filter units 14, 18. In this case the measuring signals of yaw rate sensors, speed sensors, acceleration sensors or the like, which sensors are for example already present in the aircraft as part of a flight-mechanics regulator, can in this case act as sensor elements 6 or measuring signals 8. In such an arrangement, it would essentially only be the rigid body modes - such as the tumbling oscillation and, depending on the regulator, the low-frequency elastic modes relevant from the point of view of flight mechanics, as well as the frequency range between these modes - that would be influenced.

As shown in Fig. 1, the control unit 11 further comprises the phase correction units 16, 20. The frequency behaviour of the phase correction units 16, 20 is defined according to the relation f_{Phase}(s)=-c*s+1/(c*s+1) with the parameter c to be selected freely. In contrast to parameter a, parameter c does not influence the amplitude, but only influences the phase of the loads acting on the fuselage structure or of the control quantities 10 representing said loads.

If the dynamic behaviour of the aircraft 2 in regard to stability, aeroelasticity, comfort, flight mechanics and flight characteristics turns out to be insufficient if only the control unit 11 configured with the parameters a, b is used, the above results in further options of reducing the loads acting on the fuselage structure 5 as a result of the further adjustment option using the additional parameter c.

The high-pass filters 15, 19, which are also shown in Fig. 1, make it possible to use further-reaching filter structures which allow targeted amplitude modification in a particular subinterval of the frequency range from 0 Hz to 10 Hz under consideration. In each case, the cut-off frequencies of the high-pass filters 15, 19 are to be determined by way of a further parameter d. Determining said cut-off frequencies takes place analogously to the procedure for determining the parameter b, as explained in the context of the description of parameterisation the low-pass filters 14, 18.

Due to the shown combination of low-pass filters, high-pass filters, as well as of phase correction units and amplification factor units 14 to 21, efficient reduction in the loads acting on the fuselage structure is possible. If several frequency ranges of loads acting on the fuselage structure are to be modified using the system according to the invention, several such filter combinations have to be connected in parallel, as is the case in the embodiment shown in Fig. 1. A control or regulating branch 12a comprises the sensor element 6, the signal processing unit 9, low-pass filter 14, high-pass filter 15, phase correction unit 16, amplification unit 17 as well as the rudder 28.

A control or regulating branch 13a comprises the sensor element 6, the signal processing unit 9, low-pass filter 18, high-pass filter 19, phase correction unit 20, amplification factor unit 21, as well as the ailerons 24, 25, 26, 27. When such control or regulating branches 12a, 13a are connected in parallel, each control or regulating branch can comprise a different sensor element 6, a different actuator and/or different control-, guiding- and/or regulating surfaces.

Since the loads acting on the fuselage structure greatly change as the position of the centre of gravity or the quantity of fuel in the trimming tank of the aircraft 2 changes, and because the position of the centre of gravity due to fuel consumption usually changes only very slowly, the design parameters a, b, c, d of each control or regulating branch 12a, 13a can be adjusted in real time to the current position of the centre of gravity or the quantity of fuel in the trimming tank or the precise weight distribution in the fuselage of the aircraft 2. This requires a computer unit 28a which transmits corresponding signal information 28d - including information on the position of the centre of gravity, the quantity of fuel in the trimming tank, or the weight distribution in the fuselage - to an adjustment unit 28b by way of a line 28c. The adjustment unit 28b then adjusts the parameters a, b, c, d according to this signal information 28d.

In a further embodiment (not shown) of the system according to the invention, additional sensor elements 6 and further guiding surfaces, control surfaces or regulating surfaces and/or further actuators which act directly on the fuselage structure 5 can be provided. In this way, the system can use further feedback with additional high-pass filters, low-pass filters, phase correction units as well as amplification factor units.

In order to determine the parameters a, b, c, d, in the development phase the system requires explicit load criteria of the aircraft 2, which criteria specify that at a particular position in the fuselage structure the loads are reduced as far as possible, or are reduced to below or precisely to a particular threshold value or limiting value. The respective parameters are then to be selected such that the fuselage structure load criteria are met and the loads acting on other components, and the dynamic characteristics of the aircraft (stability, aeroelasticity, comfort, flight mechanics and flight characteristics) are maintained or change only within acceptable values.

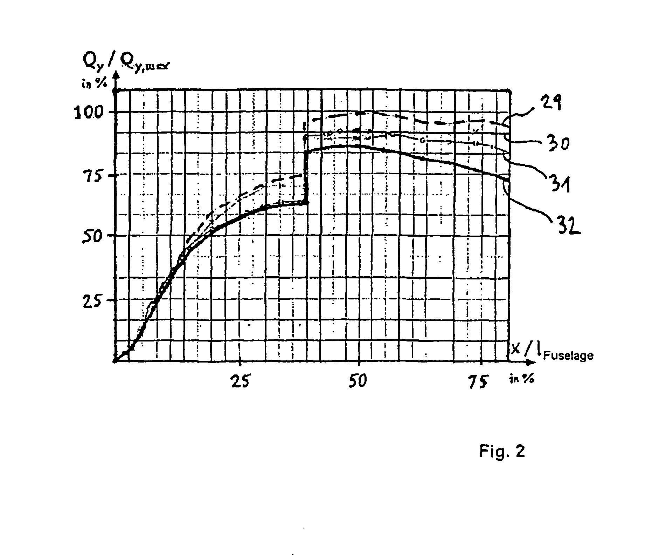

**Fig. 2** shows transverse forces Qy in a fuselage structure of an aircraft with and without the use of the system 1 according to the invention for reducing the loads acting on the fuselage structure.

At a position x/l_{fuselage} - wherein in each case position x relates to the entire length of the fuselage l_{fuselage} - the vertical axis shows the transverse forces Q_{y}/Q_{y, max} acting on the fuselage structure 5, in each case relating to a maximum transverse force Q_{y}, ₘₐₓ. The transverse forces Q_{y}/Q_{y, max} result from a load of the aircraft 2 as a result of lateral gusts 3 acting on the fuselage structure 5 (compare Fig. 1).

The curve shape 29 corresponds to the transverse forces experienced without the system 1 according to the invention for reducing the loads acting on the fuselage structure. In comparison, the curve shapes 30, 31 and 32 show the significant reduction of the transverse forces Q_{y}/Q_{y, max} achieved by means of the system 1 according to the invention along the entire length of the fuselage l_{fuselage}. The differences between the curve shapes 30, 31 and 32 result from a different configuration of the control unit 11 within the system 1. Corresponding modification of the parameters a, b, c, d within the control unit 11 - as explained above in the context of the description of Fig. 1 - in particular results in a multitude of variation options and optimisation options.

The point of discontinuity in all curve shapes 29, 30, 31, 32 at approximately 37.5% of the fuselage length roughly corresponds to the local area in which the wings 7 are connected to the fuselage structure 5 of the aircraft 2.

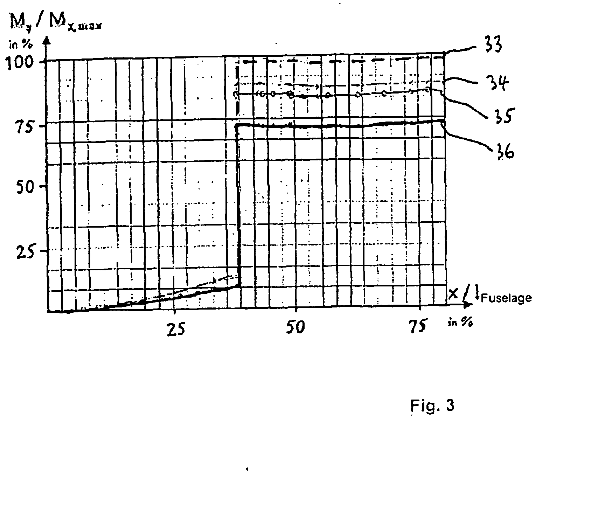

The diagram shown in **Fig. 3** essentially corresponds to the graphical representation of Fig. 2, except that, in a way that is different from the diagram of Fig. 2, the vertical axis shows the bending moments Mₓ/Mₓ, ₘₐₓ of the fuselage structure 5 of the aircraft 2, which bending moments occur at a position x/l_{fuselage} - wherein in each case x relates to the entire length of the fuselage l_{fuselage} - in each case in relation to a maximum bending moment Mₓ, ₘₐₓ. The bending moments Mₓ/Mₓ, ₘₐₓ shown, in turn result from the loads acting on the aircraft 2 due to gusts 3 acting laterally on the fuselage structure 5 (compare Fig. 1).

Again in a portion at approximately 37.5% of the fuselage length, i.e. essentially in the region where the wings 7 are attached, there is a point of discontinuity in the curve shape of the bending moments Mₓ/M_{x, max}. The curve shape 33 refers to the aircraft 2 without the system 1 according to the invention for reducing the loads acting on the fuselage structure, whereas curve shapes 34, 35 and 36 refer to the bending moment characteristics Mₓ/M_{x, max} which results from the use of the system 1 according to the invention. Here again, the use of the system results in a significant reduction in the bending moments Mₓ/M_{x, max} at the respective positions x/l_{fuselage} of the fuselage structure 5. The differences among the curve shapes 34, 35, 36 are also due to a different configuration of the control unit 11 in the system 1. As far as further details are concerned, reference is thus made to the above explanations in conjunction with the description of Fig. 2.

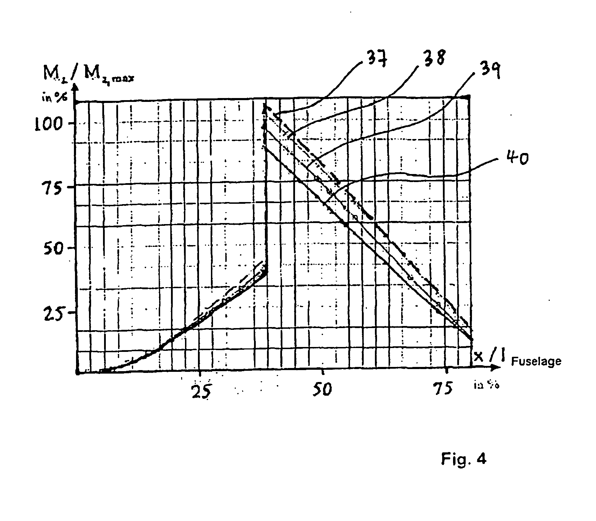

The diagram shown in **Fig. 4** essentially corresponds to the graphic representation in Fig. 3 wherein the vertical axis shows the torsional moments M_{z}/M_{z, max} which occur in the fuselage structure 5 - wherein in each case x refers to the overall fuselage length I_{fuselage} ― in each case in relation to a maximum bending moment M_{z, max}. The torsional moments M_{z}/M_{z, max} shown also result from the loads acting on the aircraft 2 as a result of gusts 3 acting laterally on the fuselage structure 5 (compare Fig. 1).

The curve shape 37 corresponds to the characteristics of the torsional moments M_{z}/M_{z, max} without the use of the system according to the invention, whereas the curve shapes 38, 39, 40 show the characteristics of the torsional moments M_{z}/M_{z, max}, which characteristics results from the use of the system 1 according to the invention. As shown in Fig. 4, the torsional moments M_{z}/M_{z, max} can also be significantly reduced using the system 1 according to the invention. As far as further details are concerned, reference is made to the description in the context of Fig. 2.

The characteristics in the diagrams of Figs 2 to 4 relate to lateral loads in the fuselage structure 5. Comparable curve shapes result in relation to exposure of the fuselage structure 5 to vertical or combined lateral and vertical loads acting on said fuselage structure, and/or as a result of flight-manoeuvre-induced loads acting on the fuselage structure. Here again, a reduction in the load acting on the fuselage occurs as a result of the application of the system according to the invention, with correspondingly adapted sensor elements 6, actuators, control-, guiding- and/or regulating surfaces.

In summary, the diagrams of Figs 2 to 4 show that all mechanical loads acting on the fuselage structure 5 of the aircraft 2 can be significantly reduced by the system 1 according to the invention.

When carrying out or performing the method according to the invention by means of the system 1 according to the invention as shown in Fig. 1, the sensor element 6 first detects the loads acting on the fuselage structure in the fuselage structure 5 of the aircraft 2, which loads are indicated by the double arrow 4. The loads acting on the fuselage structure are caused by the gusts 3 which essentially act laterally on the fuselage structure. Fig. 1 is limited to indicating lateral loads acting on the fuselage structure. However, the method according to the invention can also reduce vertical or combined vertical and lateral loads acting on the fuselage structure and/or reduce vertical, or combined vertical and lateral loads acting on the fuselage structure 5 for example induced by flight manoeuvres.

The measuring signal 8 provided by the sensor element or sensor elements 6, of which there is/are one or several, is subsequently conveyed to a signal processing unit 9. Within the signal processing unit 9, the measuring signal 8 is processed, for example by filtering and/or amplification. From the signal processing unit 9, the measuring signal which has been modified to form a controlled quantity 10 is conveyed to the control unit 11. The design of the control unit 11 corresponds to the design already explained in the context of the description of Fig. 1 so that in relation to further details concerning the control unit 11 reference is made to said description.

Within the control unit 11, the controlled quantity 10 is modified to form the set values 22, 23, and is fed back to the ailerons 24, 25, 26 and 27, as well as to the rudder 28, of the aircraft 2 by means of lines and actuators (not shown in detail in the drawing). Due to the feedback of the set values 22, 23 to the control-, guiding- and/or regulating surfaces in the form of ailerons 24, 25, 26, 27, as well as of the rudder 28, of the aircraft 2, a closed control (or regulating) loop results.

By means of corresponding parameterisation of the control unit 11 - wherein in relation to further details concerning the determination of the parameters in the control unit 11 reference is made to the description in the context of Fig. 1 above - the loads acting on the fuselage structure of the aircraft 2 in the frequency range of at least one rigid body mode of the fuselage structure 5 and/or the loads acting on the fuselage structure in the frequency range of at least one elastic mode of the fuselage structure 5 of the aircraft 2 are changed to such an extent that a significant reduction in the loads acting on the fuselage structure within the fuselage structure 5 of the aircraft 2 results.

The invention is not limited in any way to means of transport, in particular to aircraft. The invention can advantageously be applied in all large-volume and thus oscillateable spatial structures - for example ships, tall buildings, long bridges as well as large terrestrial vehicles etc. - for reducing loads acting on said structures.

### List of reference numerals

- 1: System
- 2: Aircraft
- 3: Gusts
- 4: Double arrow
- 5: Fuselage structure
- 6: Sensor element
- 7: Wing
- 8: Measuring signal
- 9: Signal processing unit
- 10: Controlled quantity
- 11: Control unit
- 12: Control line
- 12a: Control branch
- 13: Control line
- 13a: Control branch
- 14: Low-pass filter
- 15: High-pass filter
- 16: Phase correction unit
- 17: Amplification factor unit
- 18: Low-pass filter
- 19: High-pass filter
- 20: Phase correction unit
- 21: Amplification factor unit
- 22: Set value
- 23: Set value
- 24: Aileron
- 25: Aileron
- 26: Aileron
- 27: Aileron
- 28: Rudder
- 28a: Computer unit
- 28b: Adjustment unit
- 28c: Line
- 28d: Signal information
- 29: Curve shape
- 30: Curve shape
- 31: Curve shape
- 32: Curve shape
- 33: Curve shape
- 34: Curve shape
- 35: Curve shape
- 36: Curve shape
- 37: Curve shape
- 38: Curve shape
- 39: Curve shape
- 40: Curve shape

## Claims

1. A means of transport comprising a system (1) for reducing loads acting on a fuselage structure (5) in the means of transport, in particular in aircraft (2), the system comprising
at least one sensor element (6);
at least one actuator; and
at least one control unit (11);
wherein a control variable (10) representative for an amplitude characteristics and/or a phase characteristics of loads acting on the fuselage structure (5) is modified by said system (1) in a continuous frequency range such that a load reduction in the fuselage structure (5) of the means of transport results, said at least one sensor element (6) being positioned in an area where wings (7) of said means of transport are attached to the fuselage structure (5); **characterized in that**
by means of the at least one sensor element (6) the loads acting on the fuselage structure (5) are convertible to form at least one measuring signal (8) for forming at least one control variable (10), wherein by means of the control unit (11) the control variable (10) can be converted to form at least one set value (22, 23) such that a feedback of the set value (22, 23) to the at least one actuator results in modification of the amplitude characteristics and/or phase characteristics of the loads acting on the fuselage structure (5), as a result of which the load reduction in the fuselage structure (5) of the means of transport occurs.

2. The means of transport of claim 1,
wherein by means of the at least one control unit (11) the loads acting on the fuselage structure (5) in the frequency range of at least one rigid body mode of the fuselage structure (5) and/or the loads acting on the fuselage structure (5) in the frequency range of at least one elastic mode of the fuselage structure (5) of the means of transport can be reduced.

3. The means of transport of one of claims 1 or 2,
wherein the at least one control unit (11) comprises at least one low-pass filter (14, 18) as well as an amplification factor unit (21) arranged downstream of the at least one low-pass filter (14, 18).

4. The means of transport of claim 3,
wherein at least one phase correction unit (20) is assigned to at least one of the at least one low-pass filter (14, 18).

5. The means of transport of claim 3 or 4, wherein at least one high-pass filter (15, 19) is assigned to at least one of at least one low-pass filter (14, 18).

6. The means of transport of any one of claims 1 to 5,
wherein the at least one actuator is adapted to act on control-, guiding-, and/or regulating surfaces of the means of transport, in particular on ailerons (24, 25, 26, 27) and rudder (28).

7. The means of transport of any one of claims 1 to 6,
wherein the at least one actuator is adapted to act directly onto the fuselage structure (5).

8. The means of transport of any one of claims 1 to 7,
wherein a computer unit (28a) supplies signal information (28d) concerning a position of a centre of gravity, a quantity of fuel in a trimming tank, and/or a fuselage weight distribution to an adjustment unit (28b) for adapting one or more control lines (12, 13).

9. A method for reducing loads acting on a fuselage structure (5) in means of transport, in particular in aircraft (2), comprising at least one sensor element (6), at least one actuator and at least one control unit (11),
wherein the method comprises the step of
modifying a control variable (10) representative for amplitude characteristic and/or a phase characteristic of loads acting on the fuselage structure (5) in a continuous frequency range such that a load reduction in the fuselage structure (5) of the means of transport results, said at least one sensor element (6) being positioned in an area where wings (7) of said means of transport are attached to the fuselage structure (5); **characterized by**
converting, by means of the at least one sensor element (6) the loads acting on the fuselage structure (5) to form at least one measuring signal (8) for forming at least one control variable (10), and, by means of the at least one control unit (11), converting the control variable (10) to form at least one set value (22, 23), and feeding the set value (22, 23) back to the at least one actuator, which results in a modification of the amplitude characteristics and/or phase characteristics of the loads acting on the fuselage structure (5), which results in a load reduction in the fuselage structure (5) of the means of transport.

10. The method of claim 9,
comprising the step of reducing, by means of the at least one control unit (11), the loads acting on the fuselage structure (5) in the frequency range of at least one rigid body mode and/or the loads acting on the fuselage structure (5) in the frequency range of at least one elastic mode of the fuselage structure (5) of the means of transport.

11. The method of claim 9 or 10,
comprising the step of modifying, by means of at least one low-pass contained in the at least one control unit (11), oscillation fractions from the control variable (10), which fractions represent at least one of the rigid body modes of the fuselage structure (5), and/or represent at least one of the elastic modes of the fuselage structure (5).

12. The method of claim 11,
comprising the step of carrying out, by means of at least one phase correction unit (20) assigned to the at least one low-pass (14, 18), a phase correction of the control variable (10).

13. The method of claim 12,
comprising the step of modifying, by means of at least one high-pass assigned to the at least one low-pass and/or the at least one phase correction unit (20), lower-frequency oscillation fractions of the control variable (10).

14. The method of any one of claims 9 to 13,
comprising the step of conveying, by means of at least one amplification factor unit (21), the set value (22, 23) to the at least one actuator, and the at least one actuator acts on control-, guiding- and/or regulating surfaces of the means of transport, in particular on ailerons (24, 25, 26, 27) and rudder (28).

15. The method of any one of claims 9 to 14,
wherein the at least one actuator directly acts on the fuselage structure (5) of the means of transport.

16. The method of any one of claims 9 to 15,
comprising the step of generating signal information (28d) concerning a position of a centre of gravity, a quantity of fuel in a trimming tank, and/or a fuselage weight distribution by means of a computer unit (28a) for adaptation of at least one control line (12, 13).

## Patentansprüche

1. Transportmittel, das ein System (1) zum Verringern von Belastungen umfasst, die auf eine Rumpfkonstruktion (5) in dem Transportmittel, insbesondere einem Flugzeug (2), einwirken, wobei das System Folgendes umfasst:
mindestens ein Sensorelement (6);
mindestens einen Aktuator; und
mindestens eine Steuereinheit (11);
wobei eine Steuervariable (10), die eine Amplitudenkennlinie und/oder eine Phasenkennlinie von Belastungen, die auf die Rumpfkonstruktion (5) einwirken, darstellt, durch das System (1) in einem durchgängigen Frequenzbereich dergestalt modifiziert wird, dass eine Lastverringerung in der Rumpfkonstruktion (5) des Transportmittels das Ergebnis ist, wobei das mindestens eine Sensorelement (6) in einem Bereich positioniert ist, wo Flügel (7) des Transportmittels an der Rumpfkonstruktion (5) angebracht sind; **dadurch gekennzeichnet, dass**
mittels des mindestens einen Sensorelements (6) die Belastungen, die auf die Rumpfkonstruktion (5) einwirken, in mindestens ein Messsignal (8) umgewandelt werden können, um mindestens eine Steuervariable (10) zu bilden, wobei mittels der Steuereinheit (11) die Steuervariable (10) in mindestens einen Sollwert (22, 23) umgewandelt werden kann, dergestalt, dass eine Rückmeldung des Sollwertes (22, 23) an den mindestens einen Aktuator zu einer Modifizierung der Amplitudenkennlinie und/oder der Phasenkennlinie der Belastungen, die auf die Rumpfkonstruktion (5) einwirken, führt, woraufhin es zu der Lastverringerung in der Rumpfkonstruktion (5) des Transportmittels kommt.

2. Transportmittel nach Anspruch 1,
wobei mittels der mindestens einen Steuereinheit (11) die Belastungen, die auf die Rumpfkonstruktion (5) in dem Frequenzbereich von mindestens einem Starrkörpermodus der Rumpfkonstruktion (5) einwirken, und/oder die Belastungen, die auf die Rumpfkonstruktion (5) in dem Frequenzbereich von mindestens einem elastischen Modus der Rumpfkonstruktion (5) des Transportmittels einwirken, verringert werden können.

3. Transportmittel nach einem der Ansprüche 1 oder 2,
wobei die mindestens eine Steuereinheit (11) mindestens ein Tiefpassfilter (14, 18) sowie eine Verstärkungsfaktoreinheit (21) umfasst, die dem mindestens einen Tiefpassfilter (14, 18) nachgeschaltet ist.

4. Transportmittel nach Anspruch 3,
wobei mindestens einem der mindestens einen Tiefpassfilter (14, 18) mindestens eine Phasenkorrektureinheit (20) zugeordnet ist.

5. Transportmittel nach Anspruch 3 oder 4, wobei mindestens einem von mindestens einem Tiefpassfilter (14, 18) mindestens ein Hochpassfilter (15, 19) zugeordnet ist.

6. Transportmittel nach einem der Ansprüche 1 bis 5,
wobei der mindestens eine Aktuator dafür geeignet ist, auf Steuer-, Führungs- und/oder Regelungsflächen des Transportmittels, insbesondere auf Querruder (24, 25, 26, 27) und Seitenruder (28), zu wirken.

7. Transportmittel nach einem der Ansprüche 1 bis 6,
wobei der mindestens eine Aktuator dafür geeignet ist, direkt auf die Rumpfkonstruktion (5) zu wirken.

8. Transportmittel nach einem der Ansprüche 1 bis 7,
wobei eine Computereinheit (28a) Signalinformationen (28d) bezüglich einer Position eines Masseschwerpunkts, einer Kraftstoffmenge in einem Trimmtank und/oder einer Rumpfgewichtsverteilung in eine Justiereinheit (28b) einspeist, um eine oder mehrere Steuerleitungen (12, 13) anzupassen.

9. Verfahren zum Verringern von Belastungen, die auf eine Rumpfkonstruktion (5) in einem Transportmittel, insbesondere einem Flugzeug (2), einwirken, das mindestens ein Sensorelement (6), mindestens einen Aktuator und mindestens eine Steuereinheit (11) umfassend,
wobei das Verfahren folgende Schritte umfasst:
Modifizieren einer Steuervariable (10), die eine Amplitudenkennlinie und/oder eine Phasenkennlinie von Belastungen, die auf die Rumpfkonstruktion (5) einwirken, darstellt, in einem durchgängigen Frequenzbereich dergestalt, dass eine Lastverringerung in der Rumpfkonstruktion (5) des Transportmittels das Ergebnis ist, wobei das mindestens eine Sensorelement (6) in einem Bereich positioniert ist, wo Flügel (7) des Transportmittels an der Rumpfkonstruktion (5) angebracht sind; **gekennzeichnet durch**
Umwandeln - mittels des mindestens einen Sensorelements (6) - der Belastungen, die auf die Rumpfkonstruktion (5) einwirken, in mindestens ein Messsignal (8), um mindestens eine Steuervariable (10) zu bilden, und - mittels der mindestens einen Steuereinheit (11) - Umwandeln der Steuervariable (10) in mindestens einen Sollwert (22, 23), und Rückkoppeln des Sollwertes (22, 23) an den mindestens einen Aktuator, was zu einer Modifizierung der Amplitudenkennlinie und/oder der Phasenkennlinie der Belastungen, die auf die Rumpfkonstruktion (5) einwirken, führt, woraufhin es zu einer Lastverringerung in der Rumpfkonstruktion (5) des Transportmittels kommt.

10. Verfahren nach Anspruch 9,
das folgenden Schritt umfasst: Verringern - mittels der mindestens einen Steuereinheit (11) - der Belastungen, die auf die Rumpfkonstruktion (5) in dem Frequenzbereich von mindestens einem Starrkörpermodus einwirken, und/oder der Belastungen, die auf die Rumpfkonstruktion (5) in dem Frequenzbereich von mindestens einem elastischen Modus der Rumpfkonstruktion (5) des Transportmittels einwirken.

11. Verfahren nach Anspruch 9 oder 10,
das folgenden Schritt umfasst: Modifizieren - mittels mindestens eines Tiefpassfilters, das in der mindestens einen Steuereinheit (11) enthalten ist - von Oszillationsanteilen von der Steuervariable (10), wobei diese Anteile mindestens einen der Starrkörpermodi der Rumpfkonstruktion (5) darstellen und/oder mindestens einen der elastischen Modi der Rumpfkonstruktion (5) darstellen.

12. Verfahren nach Anspruch 11,
das folgenden Schritt umfasst: Ausführen - mittels mindestens einer Phasenkorrektureinheit (20), die dem mindestens einen Tiefpassfilter (14, 18) zugeordnet ist - einer Phasenkorrektur der Steuervariable (10).

13. Verfahren nach Anspruch 12,
das folgenden Schritt umfasst: Modifizieren - mittels mindestens eines Hochpassfilters, das dem mindestens einen Tiefpassfilter und/oder der mindestens einen Phasenkorrektureinheit (20) zugeordnet ist - von niederfrequenteren Oszillationsanteilen der Steuervariable (10).

14. Verfahren nach einem der Ansprüche 9 bis 13,
das folgenden Schritt umfasst: Übermitteln - mittels mindestens einer Verstärkungsfaktoreinheit (21) - des Sollwerts (22, 23) an den mindestens einen Aktuator, wobei der mindestens eine Aktuator auf Steuer-, Führungs- und/oder Regelungsflächen des Transportmittels, insbesondere auf Querruder (24, 25, 26, 27) und Seitenruder (28), wirkt.

15. Verfahren nach einem der Ansprüche 9 bis 14,
wobei der mindestens eine Aktuator direkt auf die Rumpfkonstruktion (5) des Transportmittels wirkt.

16. Verfahren nach einem der Ansprüche 9 bis 15,
das folgenden Schritt umfasst: Erzeugen von Signalinformationen (28d) bezüglich einer Position eines Masseschwerpunkts, einer Kraftstoffmenge in einem Trimmtank und/oder einer Rumpfgewichtsverteilung mittels einer Computereinheit (28a), um mindestens eine Steuerleitung (12, 13) anzupassen.

## Revendications

1. Moyen de transport comprenant un système (1) destiné à réduire les charges agissant sur la structure de fuselage (5) dans le moyen de transport, en particulier dans un avion (2), le système comprenant
au moins un élément de capteur (6) ;
au moins un actionneur ; et
au moins une unité de commande (11) ;
dans lequel une variable de commande (10) représentative d'une caractéristique d'amplitude et/ou d'une caractéristique de phase des charges agissant sur la structure de fuselage (5) est modifiée par ledit système (1) dans une bande de fréquences continue de telle sorte qu'il est possible d'obtenir une réduction de charge dans la structure de fuselage (5) du moyen de transport, ledit au moins un élément de capteur (6) étant positionné dans une zone où les ailes (7) dudit moyen de transport sont fixées à la structure de fuselage (5) ; **caractérisé en ce que**
au moyen du au moins un élément de capteur (6) les charges agissant sur la structure de fuselage (5) sont convertibles de manière à former au moins un signal de mesure (8) pour former au moins une variable de commande (10), et **en ce qu'**au moyen de l'unité de commande (11) la variable de commande (10) peut être convertie de manière à former au moins une valeur de consigne (22, 23) de telle sorte qu'une rétroaction de la valeur de consigne (22, 23) vers le au moins un actionneur a pour résultat une modification de la caractéristique d'amplitude et/ou de la caractéristique de phase des charges agissant sur la structure de fuselage (5), en conséquence de quoi il est possible d'obtenir une réduction de charge dans la structure de fuselage (5) du moyen de transport.

2. Moyen de transport selon la revendication 1,
dans lequel au moyen de la au moins une unité de commande (11) les charges agissant sur la structure de fuselage (5) dans la bande de fréquences d'au moins un mode de corps rigide de la structure de fuselage (5) et/ou les charges agissant sur la structure de fuselage (5) dans la bande de fréquences d'au moins un mode élastique de la structure de fuselage (5) du moyen de transport peuvent être réduites.

3. Moyen de transport selon l'une quelconque des revendications 1 ou 2,
dans lequel la au moins une unité de commande (11) comprend au moins un filtre passe-bas (14, 18) ainsi qu'une unité de facteur d'amplification (21) agencée en aval du au moins un filtre passe-bas (14, 18).

4. Moyen de transport selon la revendication 3,
dans lequel au moins une unité de correction de phase (20) est attribuée à au moins un filtre parmi au moins un filtre passe-bas (14, 18).

5. Moyen de transport selon la revendication 3 ou 4, dans lequel au moins un filtre passe-haut (15, 19) est attribué à au moins un filtre parmi au moins un filtre passe-bas (14, 18).

6. Moyen de transport selon l'une quelconque des revendications 1 à 5,
dans lequel le au moins un actionneur est adapté pour agir sur des surfaces de commande, de guidage et/ou de régulation du moyen de transport, en particulier sur les ailerons (24, 25, 26, 27) et la gouverne de direction (28).

7. Moyen de transport selon l'une quelconque des revendications 1 à 6,
dans lequel le au moins un actionneur est adapté pour agir directement sur la structure de fuselage (5).

8. Moyen de transport selon l'une quelconque des revendications 1 à 7,
dans lequel une unité informatique (28a) fournit des informations de signaux (28d) concernant la position d'un centre de gravité, la quantité de carburant dans un réservoir de type caisse d'assiette et/ou la répartition du poids du fuselage à une unité d'ajustement (28b) afin d'adapter une ou plusieurs lignes de commande (12, 13).

9. Procédé permettant de réduire les charges agissant sur une structure de fuselage (5) dans un moyen de transport, en particulier dans un avion (2), comprenant au moins un élément de capteur (6), au moins un actionneur et au moins une unité de commande (11),
dans lequel le procédé comprend les étapes consistant à
modifier une variable de commande (10) représentative d'une caractéristique d'amplitude et/ou d'une caractéristique de phase des charges agissant sur la structure de fuselage (5) dans une bande de fréquences continue de telle sorte qu'il est possible d'obtenir une réduction de charge dans la structure de fuselage (5) du moyen de transport, ledit au moins un élément de capteur (6) étant positionné dans une zone où les ailes (7) dudit moyen de transport sont fixées à la structure de fuselage (5) ; **caractérisé par**
la conversion, au moyen du au moins un élément de capteur (6) des charges agissant sur la structure de fuselage (5) de manière à former au moins un signal de mesure (8) pour former au moins une variable de commande (10), et, au moyen de la au moins une unité de commande (11), la conversion de la variable de commande (10) de manière à former au moins une valeur de consigne (22, 23), et l'alimentation de la valeur de consigne (22, 23) de nouveau vers le au moins un actionneur, ce qui a pour résultat une modification de la caractéristique d'amplitude et/ou de la caractéristique de phase des charges agissant sur la structure de fuselage (5), ce qui a pour résultat une réduction de charge dans la structure de fuselage (5) du moyen de transport.

10. Procédé selon la revendication 9,
comprenant l'étape consistant à réduire, au moyen de la au moins une unité de commande (11), les charges agissant sur la structure de fuselage (5) dans la bande de fréquences d'un moins un mode de corps rigide et/ou les charges agissant sur la structure de fuselage (5) dans la bande de fréquences d'au moins un mode élastique de la structure de fuselage (5) du moyen de transport.

11. Procédé selon la revendication 9 ou 10,
comprenant l'étape consistant à modifier, au moyen d'au moins un filtre passe-bas contenu dans la au moins une unité de commande (11), les fractions d'oscillation à partir de la variable de commande (10), lesquelles fractions représentent au moins un des modes de corps rigide de la structure de fuselage (5) et/ou représentent au moins un des modes élastiques de la structure de fuselage (5).

12. Procédé selon la revendication 11,
comprenant l'étape consistant à exécuter, au moyen d'au moins une unité de correction de phase (20) attribuée à au moins un filtre passe-bas (14, 18), une correction de phase de la variable de commande (10).

13. Procédé selon la revendication 12,
comprenant l'étape consistant à modifier, au moyen d'au moins un filtre passe-haut attribué à au moins un filtre passe-bas et/ou à la au moins une unité de correction de phase (20), les fractions d'oscillation de plus basse fréquence de la variable de commande (10).

14. Procédé selon l'une quelconque des revendications 9 à 13,
comprenant l'étape consistant à acheminer, au moyen d'au moins une unité de facteur d'amplification (21), la valeur de consigne (22, 23) jusqu'à au moins un actionneur, et le au moins un actionneur agit sur des surfaces de commande, de guidage et/ou de régulation du moyen de transport, en particulier sur les ailerons (24, 25, 26, 27) et la gouverne de direction (28).

15. Procédé selon l'une quelconque des revendications 9 à 14,
dans lequel le au moins un actionneur agit directement sur la structure de fuselage (5) du moyen de transport.

16. Procédé selon l'une quelconque des revendications 9 à 15,
comprenant l'étape consistant à générer des informations de signaux (28d) concernant la position d'un centre de gravité, la quantité de carburant dans un réservoir de type caisse d'assiette et/ou la répartition du poids du fuselage au moyen d'une unité informatique (28a) afin d'adapter au moins une ligne de commande (12, 13).
